(19) Europäisches Patentamt
European Patent Office
Office européen des brevets

(11) Veröffentlichungsnummer: **0 372 377 B1**

(12) **EUROPÄISCHE PATENTSCHRIFT**

(45) Veröffentlichungstag der Patentschrift: **02.02.94**

(51) Int. Cl.$^5$: **C08G 77/60**, C04B 35/58

(21) Anmeldenummer: **89122052.7**

(22) Anmeldetag: **29.11.89**

# (54) Polymere ethylenverbrückte Chlorsilazane, Verfahren zu ihrer Herstellung, sowie ein Verfahren zur Herstellung von Siliziumnitrid enthaltenden keramischen Materialien.

(30) Priorität: **03.12.88 DE 3840770**

(43) Veröffentlichungstag der Anmeldung:
**13.06.90 Patentblatt 90/24**

(45) Bekanntmachung des Hinweises auf die Patenterteilung:
**02.02.94 Patentblatt 94/05**

(84) Benannte Vertragsstaaten:
**CH DE FR GB IT LI**

(56) Entgegenhaltungen:
**EP-A- 0 235 486**
**EP-A- 0 266 918**
**EP-A- 0 313 878**
**DE-A- 3 736 914**
**FR-A- 2 611 208**
**US-A- 4 482 669**

(73) Patentinhaber: **HOECHST AKTIENGESELLSCHAFT**

**D-65926 Frankturt(DE)**

(72) Erfinder: **Vaahs, Tilo, Dr.**
**Am Flachsland 54**
**D-6233 Kelkheim(Taunus)(DE)**
Erfinder: **Peuckert, Marcellus, Dr.**
**Platanenweg 8**
**D-6238 Hofheim am Taunus(DE)**
Erfinder: **Brück, Martin**
**Haneckstrasse 17**
**D-6230 Hofheim am Taunus(DE)**

**EP 0 372 377 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue polymere ethylenverbrückte Chlorsilazane, ihre Herstellung, ihre Weiterverarbeitung zu Siliziumnitrid enthaltendem keramischem Material.

Die Pyrolyse von Polysilazanen zu Siliziumnitrid enthaltendem keramischem Material wurde bereits in der Literatur (R.R. Wills et al., Ceramic Bulletin, Vol, 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669).

Die vorliegende Erfindung stellt neue Ausgangsmaterialien für Polysilazane zur Verfügung, nämlich polymere Chlorsilazane.

Ein Gegenstand der vorliegenden Erfindung ist ein Verfahren zur Herstellung von polymeren ethylenverbrückten Chlorsilazanen, dadurch gekennzeichnet, daß man Oligosilazane der allgemeinen Formel (I)

(I) 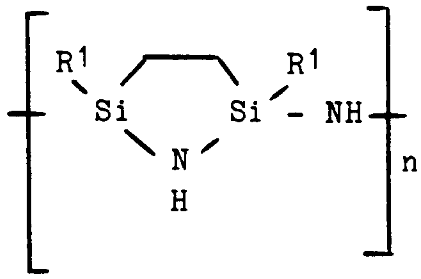

worin n etwa 2 bis etwa 12 ist, mit mindestens einem der Chlorsilane $Cl_2R^2Si\text{-}CH_2\text{-}CH_2\text{-}SiR^2Cl_2$, $Cl_3Si\text{-}CH_2\text{-}CH_2\text{-}SiR^3Cl_2$, $R^4SiCl_3$ oder $R^5SiHCl_2$ bei 30 °C bis 300 °C umsetzt, wobei $R^1$ bis $R^5$ $C_1$-$C_6$-Alkyl- oder $C_2$-$C_6$-Alkenylgruppen sind, die gleich oder verschieden sein können. Vorzugsweise haben sie 1 bis 3 C-Atome. Besonders bevorzugt ist $R^1 = R^2 = R^3 = R^5 = CH_3$ und $R^4 = CH_3$ oder Vinyl.

Die als Ausgangsprodukte eingesetzten Oligosilazane mit n etwa 2 bis etwa 12, können dadurch erhalten werden, daß man ein 1,2-Bis(organyl-dichlorsilyl)ethan der Formel

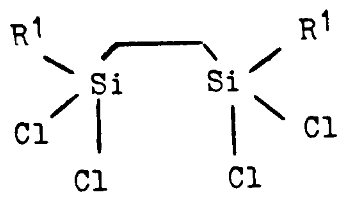 ,

wobei $R^1$ die obige Bedeutung hat, mit überschüssigem $NH_3$ in einem Lösungsmittel umsetzt, analog dazu, wie dies in US-PS 4 482 669 für Methyldichlorsilan beschrieben ist (siehe dort insbesondere Spalten 4, 5, 7, 8). Dabei entsteht im allgemeinen ein Gemisch linearer und cyclischer Oligomerer mit verschiedenen Kettenlängen n. Die Herstellung des einfachsten Homologen mit $R^1 = CH_3$ ist bereits bekannt aus K.A. Andrianov et al., Izvestiya Akademii Nauk SSSR, Seriya Khimicheskaya No. 8, pp. 1878-1880 (1973).

Vorzugsweise beträgt bei der Umsetzung zum polymeren Chlorsilazan das molare Verhältnis der Reaktanten Chlorsilan:Monomereinheit des Oligosilazans (n = 1) etwa 0,1:1 bis etwa 1:1, insbesondere etwa 0,1:1 bis etwa 0,4:1.

Zur Umsetzung der Reaktanten miteinander werden vorzugsweise die Oligosilazane vorgelegt und mindestens eins der genannten Chlorsilane zugegeben. Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C.

Das als Nebenprodukt gebildete $NH_3$ entweicht während der Reaktion teilweise. Nach beendeter Umsetzung wird der Rest an leichter flüchtigen Verbindungen im allgemeinen durch Anlegen von Vakuum aus dem Reaktionsgefäß entfernt.

Das bei der Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann von dem erfindungsgemäß hergestellten polymeren Chlorsilazan durch Extraktion des letzteren mit einem inerten organischen Lösungsmittel, wie n-Hexan, Toluol, Ether abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die erfindungsgemäßen polymeren Chlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Das Verfahren kann auch kontinuierlich gestaltet werden.

Die hergestellten neuen polymeren ethylenverbrückten Chlorsilazane haben eine molekulare Struktur, die durch die Formel (II)

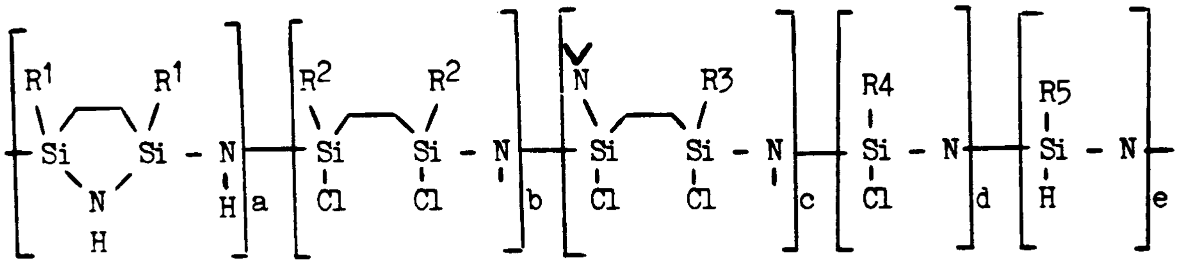

wiedergegeben werden kann, wobei die freien Valenzen an den Stickstoffatomen mit H-Atomen oder Silylresten $R^*SiXN\langle$ (X = H, Cl, $N\langle$ , $CH_2CH_2Si\langle$ ) abgesättigt sind. $R^1$,$R^2$,$R^3$,$R^4$,$R^5$, $R^*$ bedeuten dabei $C_1$-$C_6$-Alkyl- oder $C_2$-$C_6$-Alkenylgruppen, vorzugsweise mit 1 bis 3 C-Atomen, und a, b, c, d, e bedeuten die Molfraktionen der jeweiligen Struktureinheiten. Es ist a + b + c + d + e = 1. Besonders bevorzugt ist $R^1 = R^2 = R^3 = R^5 = R^* = CH_3$ und R4 = $CH_3$ oder Vinyl.

Die polymeren Chlorsilazane haben eine netzartige Struktur. Ob die Molfraktionen b, c, d, e positive Werte oder den Wert 0 annehmen, hängt von den bei der Umsetzung mit den Oligosilazanen der Formel I eingesetzten Chlorsilanen ab.

Wird (I) nur mit $R^4SiCl_3$ umgesetzt, so ist b = c = e = 0; a und d nehmen positive Werte an.

Wird (I) nur mit $R^5HSiCl_2$ umgesetzt, so ist b = c = 0; a, d und e nehmen positive Werte an, wobei $R^4 = R^5$ ist.

Wird (I) nur mit $Cl_2R^2Si - CH_2CH_2 - SiR^2Cl_2$ umgesetzt, so ist c = d = e = 0; a und b nehmen positive Werte an.

Ein weiterer Gegenstand der vorliegenden Erfindung sind demgemäß polymere ethylenverbrückte Chlorsilazane der Formel II

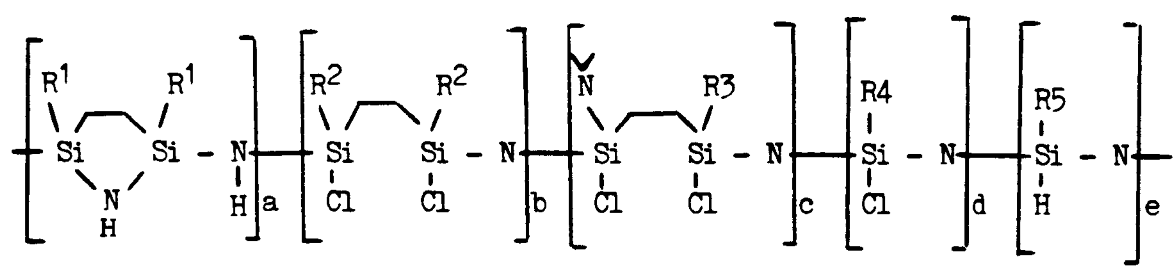

wobei die freien Valenzen der Stickstoffatome mit H-Atomen der Silylresten $R^*SiXN\langle$ (X = H,Cl,$N\langle$ , $CH_2CH_2Si\langle$ ) abgesättigt sind und wobei unabhängig voneinander $R^1$ bis $R^5$ und $R^*$ $C_1$-$C_6$-Alkyl- oder $C_2$-$C_6$-Alkenylgruppen und a,b,c,d,e die Molfraktionen der jeweiligen Struktureinheiten bedeuten. a,b,c,d,e addieren sich zum Wert eins. Vorzugsweise sind $R^1$ bis $R^5$ und $R^*$ $C_1$ - $C_3$-Alkyl- oder $C_2$-$C_3$-Alkenylgruppen. Insbesondere ist $R^1 = R^2 = R^3 = R^5 = R^* = CH_3$ und $R^4 = CH_3$ oder Vinyl.

Einzelne Indices können auch den Wert null annehmen, wie oben näher erläutert. Die jeweils vorliegenden Werte von a,b,c,d,e können durch Integration der $^1$H-NMR-Spektren und durch die Elementaranalyse ermittelt werden.

Im allgemeinen liegt a bei 0.5 bis 0.9; b,c,d,e liegen im allgemeinen bei 0.01 bis 0.4. Dabei ist $a+b+c+d+e=1$.

Bevorzugt sind solche polymeren Chlorsilazane, für die a bei 0,7 bis 0,9 liegt, insbesondere bei 0,75 bis 0,85. Die bevorzugten Werte für b, c, d, e liegen bei 0,01 bis 0,3, insbesondere bei 0,01 bis 0,2. Diese Werte lassen sich über die genannten Analysenmethoden kontrollieren. Die eben genannten bevorzugten Werte für a, b, c, d, e haben sich besonders bewährt, wenn als Endprodukt der Pyrolyse (nach Umwandlung der polymeren Chlorsilazane in Polysilazane) eine Faser hergestellt werden soll.

Ein weiterer Gegenstand der vorliegenden Erfindung sind polymere ethylenverbrückte Chlorsilazane, dadurch erhältlich, daß man Oligosilazane der allgemeinen Formel (I)

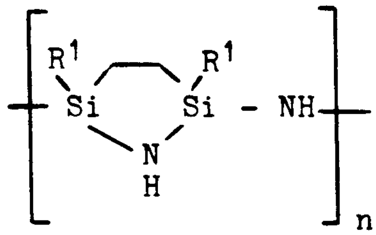

worin n etwa 2 bis etwa 12 ist, mit mindestens einem der Chlorsilane $Cl_2R^2Si\text{-}CH_2CH_2\text{-}SiR^2Cl_2$, $Cl_3Si\text{-}CH_2CH_2\text{-}SiR^3Cl_2$, $R^4SiCl_3$ oder $R^5SiHCl_2$ umsetzt, wobei $R^1,R^2,R^3,R^4,R^5$ $C_1$-$C_6$-Alkyl- oder $C_2$-$C_6$-Alkenylgruppen sind, die gleich oder verschieden sein können. Vorzugsweise haben sie 1 bis 3 C-Atome. Besonders bevorzugt ist $R^1=R^2=R^3=R^5 = CH_3$ und $R^4 = CH_3$ oder Vinyl.

Die neuen polymeren Chlorsilazane können durch Umsetzung mit Ammoniak ("Ammonolyse") in Polysilazane überführt werden, die wiederum durch Pyrolyse in Siliziumnitrid enthaltendes keramisches Material umgewandelt werden können.

Die Ammonolyse kann in flüssigem $NH_3$ erfolgen. Es ist jedoch vorteilhaft, sie in einem organischen Lösungsmittel durchzuführen. Geeignet sind alle Lösungsmittel, die sich inert gegenüber den polymeren Chlorsilazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das polymere Chlorsilan in Lösung vorzulegen und gasförmigen Ammoniak einzuleiten oder flüssigen Ammoniak hinzuzufügen. Wurden die erfindungsgemäßen polymeren Chlorsilazane in einem geeigneten organischen Lösungsmittel hergestellt, so kann die Ammonolyse ohne vorherige Abtrennung des $NH_4Cl$ in diesem Lösungsmittel durchgeführt werden. Die Ammonolyse wird vorzugsweise mit einem Überschuß $NH_3$ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von etwa -50 bis +100 °C gearbeitet, vorzugsweise bei -20 bis +30 °C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33 °C bei der Verwendung von flüssigem $NH_3$ zu arbeiten.

Nach beendeter Ammonolyse wird ggf. das überschüssige $NH_3$ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polysilazane unmittelbar als weiße Pulver erhalten. Die Polysilazane sind in den obigen organischen Lösungsmitteln löslich, so daß diese sowohl für das Beschichten von Oberflächen als auch für die Herstellung von Fasern verwendet werden können.

Die Polysilazane können durch Pyrolyse in inerter Stickstoff-oder Argonatmosphäre bei Temperaturen von 800 bis 1200 °C zu amorphen, dichten Materialien pyrolysiert werden, die im wesentlichen aus Si, N und C bestehen und in Spuren auch H und O enthalten können. Bei Pyrolysetemperaturen oberhalb 1200 °C, etwa im Bereich von 1200 °C bis 1400 °C, entstehen teilamorphe, mikrokristalline keramische Werkstoffe, die als kristalline Phase $\alpha$-$Si_3N_4$ enthalten.

Ein besonderer Vorteil ist, daß sich die Polysilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polysilazans in Lösungsmitteln, wie Toluol, THF oder Hexan ziehen. Das Fasernziehen geschieht vorteilhafterweise mittels Spinndüsen von 80 bis 150 µm Durchmesser. Durch anschließendes Strecken wird der Faden verjüngt, so daß nach der Pyrolyse ein sehr fester Faden von 2 bis 20 µm, insbesondere 5 bis 15 µm Durchmesser entsteht. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polysilazane ist die Herstellung dichter, gut haftender, amorpher oder mikrokristalliner keramischer Beschichtungen auf Metallen, insbesondere Stählen. Die Beschichtung erfolgt mit Hilfe einer Lösung des Polysilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200 °C bzw. 1200 bis 1400 °C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polysilazane mit gleichhoher keramischer Ausbeute von 70 bis 90 % statt in Inertgas auch in $NH_3$-Atmosphäre pyrolysieren. Dabei resultiert ein praktisch kohlenstofffreier, glasklarer, farbloser Werkstoff. Bei der Pyrolyse in $NH_3$ bei 1000 °C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200 °C) oder kristallinem $Si_3N_4$ (Pyrolyse oberhalb 1200 °C, insbesondere oberhalb 1300 °C). Die Pyrolyse in $NH_3$ läßt sich auf alle nach den oben beschriebenen Formgebungsverfahren hergestellten Formkörper, also aus Pulvern geformte Körper, Fasern, Beschichtungen anwenden.

Ein weiterer Gegenstand der Erfindung ist somit ein Verfahren zur Herstellung von Siliziumnitrid enthaltendem keramischem Material, dadurch gekennzeichnet, daß man die oben erwähnten, durch ihre Formel oder ihr Herstellungsverfahren charakterisierten polymeren Chlorsilazane mit Ammoniak bei -50 bis +100 °C umsetzt und das dabei gebildete Polysilazan in inerter Stickstoff- oder Argonatmosphäre oder in Ammoniakatmosphäre bei 800 bis 1400 °C pyrolysiert

Vorzugsweise führt man jedoch die Umwandlung der polymeren Chlorsilazane in Siliziumnitrid enthaltendes keramisches Material so durch, daß man die intermediär entstehenden Polysilazane nicht isoliert. In diesem Fall setzt man die polymeren Chlorsilazane vorzugsweise mit gasförmigem Ammoniak um und pyrolysiert das dabei entstehende Reaktionsgemisch in Ammoniakatmosphäre.

Ein weiterer Gegenstand der vorliegenden Erfindung ist demgemäß ein Verfahren zur Herstellung von Siliziumnitrid enthaltendem keramischem Material, dadurch gekennzeichnet, daß man die oben erwähnten, durch ihre Formel oder ihr Herstellungsverfahren charakterisierten polymeren Chlorsilazane mit Ammoniak bei 0 bis +300 °C umsetzt und das Umsetzungsprodukt in $NH_3$-Atmosphäre bei 800 - 1400 °C pyrolysiert.

In diesem Fall, wo also das intermediär gebildete Polysilazan nicht isoliert wird, muß die Formgebung natürlich bereits auf der Stufe der polymeren Chlorsilazane erfolgen, d.h. mit diesen werden bereits Fasern oder Beschichtungen oder Formkörer hergestellt, die dann mit $NH_3$ umgesetzt und pyrolysiert werden.

**Versuchsbericht**

1. Herstellung des 1,2-Bis(methyldichlorsilyl)ethans der Formel

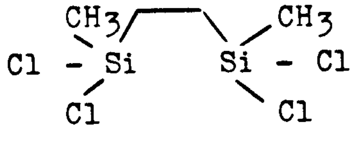

.

Mit Hilfe einer Hydrosilylierung wurden zwei Moleküle Methyldichlorsilan $(CH_3)HSiCl_2$ an ein Molekül Ethin HCCH addiert. Dazu leitete man gasförmiges Ethin in vorgelegtes Toluol als Lösungsmittel ein. Zu

dieser Lösung gab man 0.5 ml einer 0.05 molaren Lösung von Hexachloroplatinsäure in Chloroform. Man erhitzte auf 100 °C und tropfte langsam Methyldichlorsilan zu (Sdp. 45 °C). Dabei wurde ständig Ethin eingeleitet. Der Verlauf der Reaktion wurde über die Temperatur des Reaktionsgemisches verfolgt. Sank sie unter 80 °C, so lag zuviel nicht reagiertes Methyldichlorsilan vor, welches man dann vor weiterem Zutropfen zuerst abreagieren ließ. Die Ausbeute an 1,2-Bis(methyldichlorsilyl)ethan war nahezu 100 %, und die Lösung konnte ohne Aufarbeitung für die Herstellung des Oligosilazanes verwendet werden. Der Gehalt an Chlorsilan ließ sich leicht mit Hilfe des $^1$H-NMR-Spektrums feststellen.

Bevorzugt sind möglichst geringe Anteile an Lösungsmittel. Völlig lösungsmittelfrei ließ sich die Verbindung herstellen, wenn von vornherein 1,2-Bis(methyldichlorsilyl)ethan vorgelegt wurde, um die notwendige Reaktionstemperatur zu erreichen.

2. Herstellung des Oligosilazans der Formel (I) mit $R^1 = CH_3$:

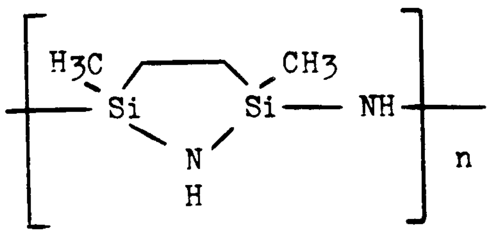

n = 2-12

In 1400 ml absolutem THF wurden 150 ml (181 g; 0.71 mol) $Cl_2(CH_3)SiCH_2CH_2Si(CH_3)Cl_2$ gelöst, dann wurde 3 Stunden lang Ammoniak eingeleitet (Einleitegeschwindigkeit 0.5 l/min). Durch Kühlen mit einem Eisbad wurde die Temperatur in einem Bereich von 0 °C bis 15 °C gehalten. Zur Vervollständigung der Reaktion wurde eine Stunde bei Raumtemperatur gerührt und anschließend unter $N_2$ das Ammoniumchlorid abgetrennt. Der Niederschlag wurde 2 mal mit je 200 ml trockenem THF gewaschen und die vereinigten Filtrate unter reduziertem Druck eingeengt. Man erhielt das Oligosilazan in Form eines klaren, leicht beweglichen Öls in einer Ausbeute von 82 g (80 % der Theorie).

## Beispiele

### Beispiel 1

Herstellung des polymeren Chlorsilazans der Formel (II) mit $R^1 = R^4 = CH_3$ und $b = c = e = 0$ mit Hilfe von Methyltrichlorsilan.

61.6 g (0.42 mol) Oligosilazan der Formel (I) mit $R^1 = CH_3$ (Anzahl der Mole wird auf die Monomereneinheit der Formel (I) mit $n = 1$ bezogen) wurden bei Raumtemperatur in 150 ml Toluol gelöst und mit 12.5 g (0.084 mol; 9.8 ml) Methyltrichlorsilan versetzt. Anschließend wurde zum Siedepunkt erhitzt und 3 Stunden bei dieser Temperatur gehalten. Dabei wurde die anfänglich klare Lösung trübe und es bildete sich ein weißer Niederschlag.

Danach wurden alle flüchtigen Anteile (Lösungsmittel, $NH_3$) bei Unterdruck abdestilliert und dabei gleichzeitig die Temperatur des Reaktionsgemisches langsam auf 220 °C erhöht. Schließlich beließ man das Gemisch zwei Stunden unter Vollvakuum bei dieser Temperatur. Dadurch sublimierte sämtliches gebildetes Ammoniumchlorid ab und es blieb eine goldgelbe, klare Schmelze zurück. Beim Abkühlen erstarrte diese zu einer spröden, glasartigen, klaren Substanz. Die Ausbeute betrug 51.2 g.
Chemische Zusammensetzung: $C_2H_{5.7}Cl_{0.14}N_{0.76}Si_1$
Struktur: Formel (II) mit $a = 0.72$, $d = 0.28$, $b = c = e = 0$, $R^1 = R^4 = CH_3$

| Elementaranalyse (Gew.-%): | | | | | |
|---|---|---|---|---|---|
| Gefunden:<br>Berechnet: | 31.8 %C;<br>28.1 %C; | 7.5 %H; | 6.5 %Cl;<br>7.3 %Cl; | 14.2 %N;<br>17.8 %N; | 37.3 %Si<br>35.0 %Si |

Molmasse: 1915 g/mol, osmometrisch in Benzol gemessen.

**Beispiel 2**

Herstellung des polymeren Chlorsilazans der Formel (II) mit $R^1 = R^4 = R^5 = CH_3$ und $b = c = 0$ mit Hilfe von Methyldichlorsilan.

82 g ( 0.56 mol) Oligosilazan (vgl. Beispiel 1) wurden bei Raumtemperatur in 300 ml trockenem Toluol gelöst und mit 16.7 ml (18.4 g; 0.16 mol) Methyldichlorsilan versetzt. Anschließend wurde zum Sieden erhitzt und 3 Stunden bei dieser Temperatur gehalten. Dabei wurde die anfänglich klare Lösung trübe und es bildete sich ein weißer Niederschlag. Danach wurden alle flüchtigen Anteile bei Unterdruck abdestilliert und dabei gleichzeitig die Temperatur des Reaktionsgemisches langsam auf 200 °C erhöht. Schließlich beließ man das Gemisch 2 Stunden unter Vollvakuum bei dieser Temperatur. Dadurch sublimierte das gebildete Ammoniumchlorid ab, und es blieb eine klare, goldgelbe Schmelze zurück.

Beim Abkühlen erstarrte diese zu einer spröden, glasartigen, klar durchscheinenden Substanz. Die Ausbeute betrug 87.5 g.

Chemische Zusammensetzung: $C_{1.9}\ H_{5.8}\ Cl_{0.22}\ N_{0.73}\ Si_1$

Struktur: Formel (II) mit a = 0.56, d = 0.39, e = 0.05

| Elementaranalyse (Gew.-%): | | | | | |
|---|---|---|---|---|---|
| Gefunden: | 30.04% C; | 7.6% H; | 10.4% Cl; | 13.5% N; | 36.8% Si |
| Berechnet: | 27.1 % C; | 6.9% H; | 11.6% Cl; | 18.4% N; | 36.0% Si |

Molmasse: 1200 g/mol, osmometrisch in Benzol gemessen.

**Versuchsbericht**

Herstellung des Polysilazans aus dem in Beispiel 1 hergestellten polymeren Chlorsilazan.

53.1 g polymeres Chlorsilazan das gemäß Beispiel 1 hergestellt worden war, wurden in 400 ml absolutem THF gelöst und mit Ammoniak bei 0 °C bis 5 °C gesättigt. Das ausgefallene Ammoniumchlorid wurde abgetrennt und das Lösungsmittel bei Unterdruck und 20 °C abdestilliert. Es blieb ein pulverförmiger Rückstand (51.6 g) zurück, welcher kein Chlor mehr enthielt. Das $^1$H-NMR-Spektrum zeigte noch einen Gehalt von 10 % THF an

Chemische Zusammensetzung: $C_{2.68}\ H_{5.7}\ N_{0.92}\ Si_1$

| Elementaranalyse (Gew.-%)(gefunden): | | | |
|---|---|---|---|
| 36.1 %C; | 7.4 %H, | 16.7 %N: | 36.1 %Si |

**Patentansprüche**

1. Verfahren zur Herstellung von polymeren ethylenverbrückten Chlorsilazanen, dadurch gekennzeichnet, daß man Oligosilazane der allgemeinen Formel (I)

(I) 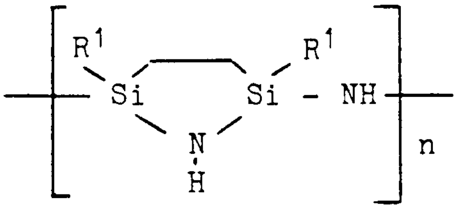

worin n 2 bis 12 ist, mit mindestens einem der Chlorsilane $Cl_2R^2Si\text{-}CH_2\text{-}CH_2\text{-}SiR^2Cl_2$, $Cl_3Si\text{-}CH_2\text{-}CH_2\text{-}SiR^3Cl_2$ $R^4SiCl_3$ oder $R^5SiHCl_2$ bei 30 °C bis 300 °C umsetzt, wobei $R^1$ bis $R^5$ $C_1$-$C_6$-Alkyl- oder $C_2$-$C_6$-Alkenylgruppen sind, die gleich oder verschieden sein können.

2. Verfahren zur Herstellung von polymeren ethylenverbrückten Chlorsilazanen, dadurch gekennzeichnet, daß man Oligosilazane, die durch Reaktion eines 1,2-Bis(organyldichlorsilyl)ethans der Formel

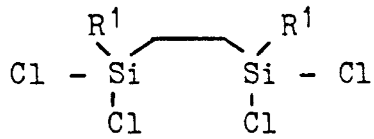

mit $NH_3$ erhalten worden sind, mit mindestens einem der Chlorsilane $Cl_2R^2Si\text{-}CH_2\text{-}CH_2\text{-}SiR^2Cl_2$, $Cl_3Si\text{-}CH_2\text{-}CH_2\text{-}SiR^3Cl_2$, $R^4SiCl_3$ oder $R^5SiHCl_2$ bei 30 °C bis 300 °C umsetzt, wobei $R^1$ bis $R^5$ $C_1$-$C_6$-Alkyl- oder $C_2$-$C_6$-Alkenylgruppen sind, die gleich oder verschieden sein können.

3. Verfahren nach Anspruch 1 oder 2, dadurch gekennzeichnet, daß $R^1$ bis $R^5$ $C_1$-$C_3$-Alkyl- oder $C_2$-$C_3$-Alkenylgruppen bedeuten.

4. Verfahren nach Anspruch 1 oder 2, dadurch gekennzeichnet, daß $R^1 = R^2 = R^3 = R^5 = CH_3$ und $R^4 = CH_3$ oder Vinyl ist.

5. Verfahren nach einem der Ansprüche 1 bis 4, dadurch gekennzeichnet, daß das molare Verhältnis der Chlorsilane zur Monomereinheit des Oligosilazans 0.1:1 bis 1:1 beträgt.

6. Verfahren nach einem der Ansprüche 1 bis 5, dadurch gekennzeichnet, daß man beim Zusammengeben der Reaktanten eine Temperatur von 30 °C bis 50 °C einhält und anschließend auf 100 °C bis 300 °C erhitzt.

7. Polymere ethylenverbrückte Chlorsilazane der Formel (II)

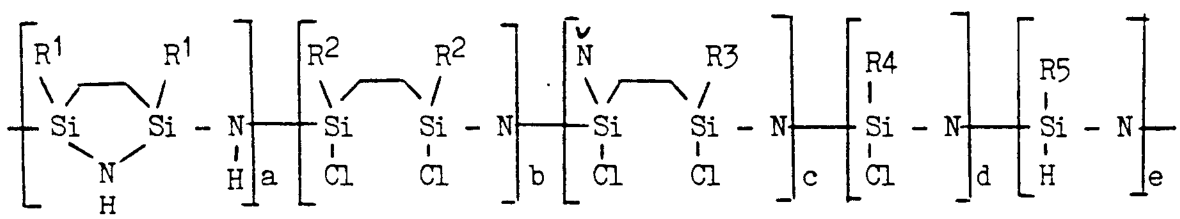

wobei die freien Valenzen der Stickstoffatome mit H-Atomen oder Silylresten $R^*SiXN\langle$ (X = H,Cl,N$\langle$, $CH_2CH_2Si\langle$ ) abgesättigt sind und wobei unabhängig voneinander $R^1$ bis $R^5$ und $R^*$ $C_1$-$C_6$-Alkyl- oder $C_2$-$C_6$-Alkenylgruppen und a,b,c,d,e die Molfraktionen der jeweiligen Struktureinheiten bedeuten, wobei $a+b+c+d+e = 1$ ist.

8. Polymere Chlorsilazane nach Anspruch 7, dadurch gekennzeichnet, daß $R^1$ bis $R^5$ und $R^*$ $C_1$-$C_3$-Alkyl- oder $C_2$-$C_3$-Alkenylgruppen sind.

9. Polymere Chlorsilazane nach Anspruch 7, dadurch gekennzeichnet, daß $R^1 = R^2 = R^3 = R^5 = R^* = CH_3$ und $R^4 = CH_3$ oder Vinyl ist.

10. Polymere Chlorsilazane, erhältlich nach dem Verfahren gemäß einem der Ansprüche 1 bis 6.

11. Verfahren zur Herstellung von Siliziumnitrid enthaltendem keramischem Material, dadurch gekennzeichnet, daß man polymere Chlorsilazane gemäß einem der Ansprüche 7 bis 10 mit Ammoniak bei -50 bis +100 °C umsetzt und das dabei gebildete Polysilazan in inerter Stickstoff- oder Argonatmosphäre oder in Ammoniakatmosphäre bei 800 bis 1400 °C pyrolysiert.

12. Verfahren zur Herstellung von Siliziumnitrid enthaltendem keramischem Material, dadurch gekennzeichnet, daß man polymere Chlorsilazane gemäß einem der Ansprüche 7 bis 10 mit Ammoniak bei 0 bis 300 °C umsetzt und das Umsetzungsprodukt in $NH_3$-Atmosphäre bei 800 - 1400 °C pyrolysiert.

## Claims

1. A process for the preparation of polymeric ethylene-bridged chlorosilazanes, which comprises reacting an oligosilazane of the formula (I)

(I) 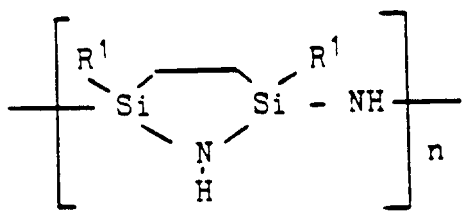

in which n is 2 to 12, with at least one of the chlorosilanes $Cl_2R^2Si\text{-}CH_2\text{-}CH_2\text{-}SiR^2Cl_2$, $Cl_3Si\text{-}CH_2\text{-}CH_2\text{-}SiR^3Cl_2$, $R^4SiCl_3$ or $R^5SiHCl_2$ at 30 °C to 300 °C, where $R^1$ to $R^5$ are $C_1$-$C_6$-alkyl or $C_2$-$C_6$-alkenyl groups, which may be identical or different.

2. A process for the preparation of polymeric ethylene-bridged chlorosilazanes, which comprises reacting an oligosilazane, which has been obtained by reaction of a 1,2-bis(organyldichlorosilyl)ethane of the formula

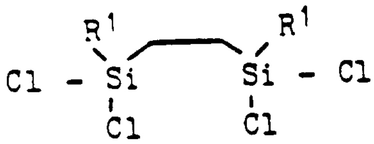

with $NH_3$, with at least one of the chlorosilanes $Cl_2R^2Si\text{-}CH_2\text{-}CH_2\text{-}SiR^2Cl_2$, $Cl_3Si\text{-}CH_2\text{-}CH_2\text{-}SiR^3Cl_2$, $R^4SiCl_3$ or $R^5SiHCl_2$ at 30 °C to 300 °C, where $R^1$ to $R^5$ are $C_1$-$C_6$-alkyl or $C_2$-$C_6$-alkenyl groups, which may be identical or different.

3. The process as claimed in claim 1 or 2, wherein $R^1$ to $R^5$ denote $C_1$-$C_3$-alkyl or $C_2$-$C_3$-alkenyl groups.

4. The process as claimed in claim 1 or 2, wherein $R^1 = R^2 = R^3 = R^5 = CH_3$ and $R^4 = CH_3$ or vinyl.

5. The process as claimed in one of claims 1 to 4, wherein the molar ratio of the chlorosilanes to the monomer unit of the oligosilazane is 0.1:1 to 1:1.

6. The process as claimed in one of claims 1 to 5, wherein a temperature of 30 °C to 50 °C is maintained when combining the reactants, and subsequently the mixture is heated to 100 °C to 300 °C.

7. A polymeric ethylene-bridged chlorosilazane of the formula (II)

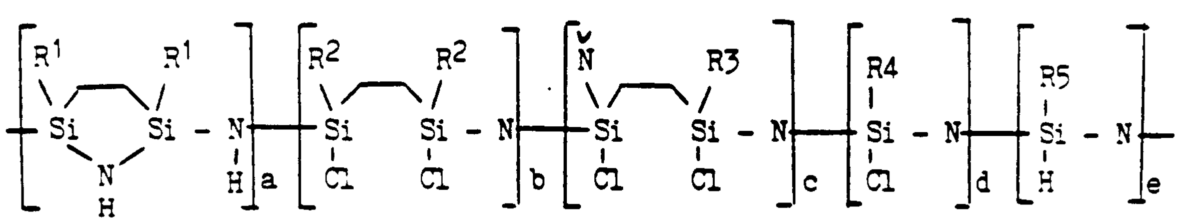

in which the free valencies of the nitrogen atoms are saturated with H atoms or silyl radicals $R^*SiXN\langle$ (X = H, Cl, $N\langle$, $CH_2CH_2Si\langle$ ) and where, independently of one another, $R^1$ to $R^5$ and $R^*$ denote $C_1$-$C_6$-alkyl or $C_2$-$C_6$-alkenyl groups and a, b, c, d and e denote the mole fractions of the individual structural units, with a + b + c + d + e = 1.

**8.** A polymeric chlorosilazane as claimed in claim 7, wherein $R^1$ to $R^5$ and $R^*$ are $C_1$-$C_3$-alkyl or $C_2$-$C_3$-alkenyl groups.

**9.** A polymeric chlorosilazane as claimed in claim 7, wherein $R^1 = R^2 = R^3 = R^5 = R^* = CH_3$ and $R^4 = CH_3$ or vinyl.

**10.** A polymeric chlorosilazane which is obtainable by the process as claimed in one of claims 1 to 6.

**11.** A process for the preparation of a ceramic material containing silicon nitride, which comprises reacting a polymeric chlorosilazane as claimed in one of claims 7 to 10 with ammonia at -50 to +100 °C and pyrolyzing the polysilazane thus formed in an inert atmosphere of nitrogen or argon or in an atmosphere of ammonia at 800 to 1400 °C.

**12.** A process for the preparation of a ceramic material containing silicon nitride, which comprises reacting a polymeric chlorosilazane as claimed in one of claims 7 to 10 with ammonia at 0 to 300 °C and pyrolyzing the reaction product in an atmosphere of $NH_3$ at 800 - 1400 °C.

**Revendications**

**1.** Procédé de préparation de chlorosilazanes polymères pontés par des groupes éthyléniques, caractérisé en ce que l'on fait réagir des oligosilazanes de formule générale (I)

(I) 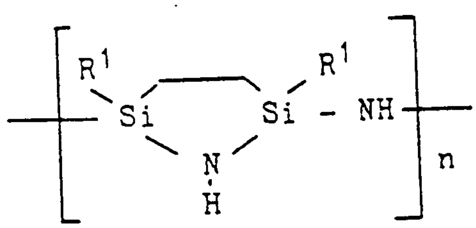

dans laquelle n est de 2 à 12, avec au moins un des chlorosilanes $Cl_2R^2Si$-$CH_2$-$CH_2$-$SiR^2Cl_2$, $Cl_3Si$-$CH_2$-$CH_2$-$SiR^3Cl_2$, $R^4SiCl_3$ ou $R^5SiHCl_2$ à une température de 30 °C à 300 °C, $R^1$ et $R^5$ étant des groupes alkyle en $C_1$-$C_6$ ou alcényle en $C_2$-$C_6$ qui peuvent être identiques ou différents.

**2.** Procédé de préparation de chlorosilazanes polymères pontés par des groupes éthyléniques, caractérisé en ce que l'on fait réagir des oligosilazanes qui ont été obtenus par réaction d'un 1,2-bis-(organylchlorosilyl)éthane de formule

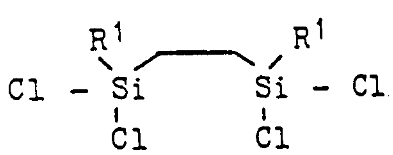

avec $NH_3$, avec au moins l'un des chlorosilanes $Cl_2R^2Si$-$CH_2$-$CH_2$-$SiR^2Cl_2$, $Cl_3Si$-$CH_2$-$CH_2$-$SiR^3Cl_2$, $R^4SiCl_3$ ou $R^5SiHCl_2$ à une température de 30 °C à 300 °C, $R^1$ à $R^5$ étant des groupes alkyle en $C_1$-$C_6$ ou alcényle en $C_2$-$C_6$ qui peuvent être identiques ou différents.

**3.** Procédé suivant la revendication 1 ou 2, caractérisé en ce que $R^1$ a $R^5$ représentent des groupes alkyle en $C_1$-$C_3$ ou alcényle en $C_2$-$C_3$.

**4.** Procédé suivant la revendication 1 ou 2, caractérisé en ce que $R^1 = R^2 = R^3 = R^5 = CH_3$ et $R^4 = CH_3$ ou vinyle.

**5.** Procédé suivant l'une des revendications 1 à 4, caractérisé en ce que le rapport molaire des chlorosilanes à l'unité monomère de l'oligosilazane est de 0,1:1 à 1:1.

**6.** Procédé suivant l'une des revendications 1 à 5, caractérisé en ce que l'on maintient pendant la mise en présence des réactifs une température de 30 °C à 50 °C et que l'on chauffe ensuite à une température de 100 °C à 300 °C.

**7.** Chlorosilazanes polymères pontés par des groupes éthyléniques de formule (II)

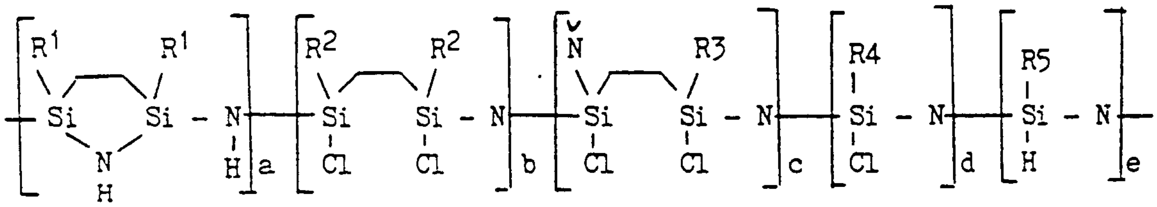

les valences libres des atomes d'azote étant saturées par des atomes H ou des restes silyle $R^*SiXN<$ ($X$ = H, Cl,$N<$ , $CH_2CH_2Si<$ ), et $R^1$ à $R^5$ et $R^*$ représentant indépendamment l'un de l'autre des groupes alkyle en $C_1$-$C_6$ ou alcényle en $C_2$-$C_6$ et a, b, c, d, e, les fractions molaires des différentes unités structurelles, et où $a + b + c + d + e = 1$.

**8.** Chlorosilazanes polymères suivant la revendication 7, caractérisés en ce que $R^1$ à $R^5$ et $R^*$ sont des groupes alkyle en $C_1$-$C_3$ ou alcényle en $C_2$-$C_3$.

**9.** Chlorosilazanes polymères suivant la revendication 7, caractérisés en ce que $R^1 = R^2 = R^3 = R^5 = R^* = CH_3$ et $R^4 = CH_3$ ou vinyle.

**10.** Chlorosilazanes polymères pouvant être obtenus suivant le procédé d'une des revendications 1 à 6.

**11.** Procédé de préparation de matériau céramique contenant du nitrure de silicium, caractérisé en ce que l'on fait réagir des chlorosilazanes polymères suivant l'une des revendications 7 à 10 avec l'ammoniac à une température de -50 à +100 °C et que l'on pyrolyse le polysilazane ainsi formé en atmosphère inerte d'azote ou d'argon ou en atmosphère d'ammoniac à une température de 800 à 1400 °C.

**12.** Procédé de préparation de matériau céramique contenant du nitrure de silicium, caractérisé en ce que l'on fait réagir des chlorosilazanes polymères suivant l'une des revendications 7 à 10 avec l'ammoniac à une température de 0 à 300 °C et que l'on pyrolyse le produit de la réaction en atmosphère de $NH_3$ à 800 - 1400 °C.